# EUROPEAN PATENT SPECIFICATION

(11) **EP 3 060 426 B1**
(45) Date of publication and mention of the grant of the patent: **11.04.2018**
(21) Application number: 14856632.6
(22) Date of filing: 21.10.2014
(51) Int. Cl.: B64D 11/06

(54) **LEG RESTRAINT DEVICE FOR SIDE-FACING SEATED VEHICLE OCCUPANTS**
BEINRÜCKHALTEVORRICHTUNG FÜR AN DER SEITE SITZENDE FAHRZEUGINSASSEN
DISPOSITIF DE RETENUE DE JAMBES POUR OCCUPANTS DE VÉHICULE À SIÈGES LATÉRAUX

(30) Priority: 22.10.2013 US 201314060143
(43) Date of publication of application: 31.08.2016
(73) Proprietor: B/E Aerospace, Inc., Wellington, FL 33414 (US)
(72) Inventor: MEISTER, Pete, C., Miami, FL 33129 (US); FARVET, Michael, J., Wellington, FL 33414 (US)
(74) Representative: Algemeen Octrooi- en Merkenbureau B.V.
(86) International application number: PCT/US2014/061601
(87) International publication number: WO 2015/061336

(56) References cited:
- WO-A1-2013/012890
- WO-A1-2013/012890
- US-A- 2 859 803
- US-A1- 2003 184 061
- US-A1- 2005 127 654
- US-A1- 2011 012 329
- US-A1- 2011 043 028
- US-A1- 2011 272 929
- US-B1- 6 217 059

## Description

### Cross-Reference to Related Patent Applications

This application is a continuation of and claims priority to co-pending U.S. Patent Application No. 14/060,143, filed October 22, 2013.

### Technical Field and Background of the Invention

The present invention relates to a leg restraint device for side-seated vehicle occupants. In particular, the invention relates to a leg restraint device for side-seated occupant of, for example, corporate aircraft of the type offering side-facing seats for passengers. The disclosed invention has application in any form of vehicle transportation where passenger or occupant seats may be mounted in a side-facing orientation in relation to the direction of forward travel of the vehicle, such as an aircraft. The FAA has released Policy PS-ANM-25-03-R1 requiring leg flail prevention for occupants seated in side-facing seats when the occupant's upper leg is restricted by contact with the seat itself and/or with an interior component. In order to provide adequate occupant protection, the lower legs must also be restricted in a similar manner to avoid upper leg femur bone torsion. Thus, there is a need for a device that will provide this lower leg support during a dynamic event such as a crash.

Violent or abrupt deceleration can cause high g-force lateral loading on a side-facing passenger, causing lateral leg movement and leg rotation about the knee and femur. This can cause dislocations, muscle and tendon injuries and fractures due to the restraint exerted on the passengers' torso by seat belts and/or arm rests while the legs are unrestrained. However, belts or similar restraints on the legs are not advisable due to the additional time needed to remove the restraints, as well as the possibility that injuries to the passenger may make it difficult for either the passenger or emergency personnel to remove such restraints.

Therefore, there is a need for a type of leg restraint that provides protection to the legs of side-facing seat occupants in the event of a crash or other rapid deceleration, while not inhibiting rapid egress from the seat after the event.

WO 2013/012890 discloses a restraint system for protecting at least one aircraft occupant, the aircraft including a cabin having at least one seat facing a longitudinal center line of the aircraft. The restraint system includes a first airbag inflatable from a stored position to an inflated position. The system also includes a mechanism to lessen movement of the lower legs of the occupant.

The leg flail prevention device disclosed in this application deploys automatically and is designed to be triggered by the same sensor and trigger that is used to deploy inflatable shoulder harness air bags also installed on the side-facing seat. As such, for installations that restrict the side-facing occupant's upper legs in the forward direction, the automatic leg flail prevention device is utilized to introduce the higher level of occupant protection. In the embodiment disclosed in the application, a linear restraint panel presents the main restriction to the occupant's lower legs to prevent leg flail. This restraint panel is deployed by the inflation force of an attached air bag. Once the air bag deploys the restraint panel, the portion of the air bag attached to the restraint panel further inflates between the restraint panel and the leg to cushion the impact of the occupant's legs with the restraint panel.

### Summary of the Invention

It is therefore an object of the present invention to provide a leg restraint that provides protection to the legs of side-facing seat occupants in the event of a crash or other rapid deceleration.

It is another object of the invention to provide a leg restraint device that provides protection to the legs of side-facing seat occupants in the event of a crash or other rapid deceleration, while not inhibiting rapid egress from the seat after the event.

It is another object of the invention to provide a leg restraint device that provides protection to the lower legs of side-facing seat occupants in the event of a crash or other rapid deceleration, but that need not be deployed during taxi, take-off and landing ("TTOL").

It is another object of the invention to provide a leg restraint that includes an air bag as a means of deploying a linear restraint panel that acts to restrict lateral movement of the lower legs of a side-seated occupant.

It is another object of the invention to provide a leg restraint that includes a deployable air bag as a means of cushioning and restricting lateral movement of the lower legs of a side-facing seat occupant.

It is another object of the invention to provide a leg restraint that includes a deployable air bag utilized to deploy outwardly from the seat a linear restraint panel that acts to restrict lateral movement of the lower leg, whereupon the air bag continues deploying and serves the further purpose of cushioning and restricting lateral movement of the lower legs of a side-facing seat occupant.

These and other objects and advantages of the invention are achieved by providing a leg restraint for side-seated vehicle occupants, and including a leg-restraining member adapted for being mounted in proximity to a side-facing vehicle seat and selectively moveable between a deployed, outwardly-extending leg-protecting position and a retracted, non-leg interfering position, and an actuator positioned operatively proximate the leg-restraining member and responsive to a signal output by a sensor for deploying the leg-restraining member upon the occurrence of an abrupt deceleration of the vehicle sensed by the sensor. The actuator includes a cushion, and is adapted for being positioned for deployment between the leg-restraining member and the legs of the seat occupant. The cushion is positioned on the actuator to cushion the legs against direct impact against the deployed leg-restraining member.

According to another embodiment of the invention, a biasing member cooperates with the leg-restraining member to move the leg-restraining member into the retracted position after impact of an occupant's leg against the leg-restraining member.

According to another embodiment of the invention, the actuator during a first phase deploys the leg-restraining member and during a second phase the actuator moves into a position between the leg-restraining member and the legs of the seat occupant wherein the cushion protects the legs against direct impact against the deployed leg-restraining member.

According to another embodiment of the invention, the actuator during a first phase deploys the leg-restraining member, during a second phase deploys to a position between the leg-restraining member and the legs of the seat occupant and during a third phase deploys to a position beyond an outermost extent of the deployed leg-restraining member to cushion the legs against direct impact against the deployed leg-restraining member.

According to another embodiment of the invention, a retractor is provided for returning the leg-restraining member back into its retracted position upon the leg-restraining member reaching its fully deployed position, wherein the retractor comprises a spring having a bias that is initially overpowered by the operation of the actuator as the leg-restraining member is deployed, and is biased to return the leg-restraining member to its retracted position as the actuator retracts.

According to another embodiment of the invention, the cushion is shaped such that its widest extent is at its distal end.

According to another embodiment of the invention, the leg-restraining device includes a restraint panel having relatively upright side walls.

According to another embodiment of the invention, a sensor is provided for detecting abrupt movement of the vehicle in the direction of forward travel of the vehicle incident to an abrupt deceleration and outputting a responsive signal to a trigger responsive to the signal from the sensor for activating the air bag.

According to another embodiment of the invention, the leg restraint is a restraint panel mounted in proximity to the side-facing aircraft seat and selectively moveable between a deployed, laterally-extending leg-protecting position and a retracted, non-leg interfering position. A sensor is provided for detecting abrupt movement of the vehicle in the direction of forward travel of the vehicle incident to an abrupt deceleration and outputting a responsive signal. The actuator is mounted on the restraint panel in a normally retracted configuration and in a position wherein, upon actuation, propels the restraint panel into the deployed position and then retracts. A trigger responsive to the signal output by the sensor is provided for deploying the actuator, and a biasing member includes a spring that is initially overpowered by the operation of the actuator as the restraint panel is deployed, and is biased to return the restraint panel to its retracted position as the actuator retracts.

According to another embodiment of the invention, the restraint panel is mounted in a housing adapted for being positioned under the seat bottom of the side-facing aircraft seat.

According to another embodiment of the invention, the restraint panel includes a slide mounted in the housing for movement on at least one stationary guide shuttle mounted on an inner surface of the housing.

According to another embodiment of the invention, the spring is provided for returning the leg- restraining member back into its retracted position upon the leg-restraining member reaching its fully deployed position.

According to another embodiment of the invention, the spring has a bias that is initially overpowered by the operation of the actuator as the leg-restraining member is deployed, and is biased to return the leg-restraining member to its retracted position as the actuator retracts.

According to another embodiment of the invention, the restraint panel includes a recess extending along a length of the restraint panel, and a guide shuttle mounted on the housing and having wheels engaging opposing top and bottom sides of the recess to guide the restraint panel between its retracted and deployed positions.

### Brief Description of the Drawing Figures

The present invention is best understood when the following detailed description of the invention is read with reference to the accompanying drawings, in which:
Figure 1 is a perspective view of a side-seated aircraft seat, showing a leg restraint device according to a preferred embodiment of the invention in its retracted position;
Figure 2 is a side elevation of a side-seated aircraft seat, showing a leg restraint device according to a preferred embodiment of the invention in its retracted position;
Figure 3 is a perspective view of a side-seated aircraft seat, showing a leg restraint device according to a preferred embodiment of the invention in its deployed position;
Figure 4 is a side elevation of a side-seated seat, showing a leg restraint device according to a preferred embodiment of the invention in its deployed position;
Figure 5 is a partially-exploded view of one embodiment of the invention showing the air bag in its stowed, retracted position;
Figure 6 is a partially-exploded view of one embodiment of the invention showing the air bag in its fully deployed position;
Figure 7 is a vertical cross-section taken along line 7-7 of Figure 5;
Figure 8 is an exploded view of one embodiment of the invention from a side opposite Figures 5 and 6; and
Figure 9 is a vertical cross-section taken along line 9-9 of Figure 8.

### Detailed Description of the Preferred Embodiment

Referring now specifically to the drawings, the environment of the disclosure is an aircraft of the type having side-facing seats, such as seat 10, having a seat bottom 12, seat back 14 and an armrest/end bay 16. Accordingly, a seat occupant sits with his or her back to the aircraft fuselage "A", facing outward in a generally perpendicular direction in relation to the longitudinal dimension of the aircraft and its direction of forward travel. For this reason, the occupant is subject to substantial lateral g-force loading along the longitudinal axis of the aircraft in the event of an abrupt deceleration such as might result during hard braking or a forward-directed crash event. While the upper torso and the thigh area of the legs are restrained to some extent by the armrest 16 and the seat belt 18, the lower legs are free to be projected laterally forward, rotating violently around an axis defined by the knees, causing potential serious injury to both the knees and lower legs unless they are restrained in some manner. Injury to the legs is a particularly serious concern since such injuries could prevent a passenger from being able to egress unaided from the aircraft in the event of an accident.

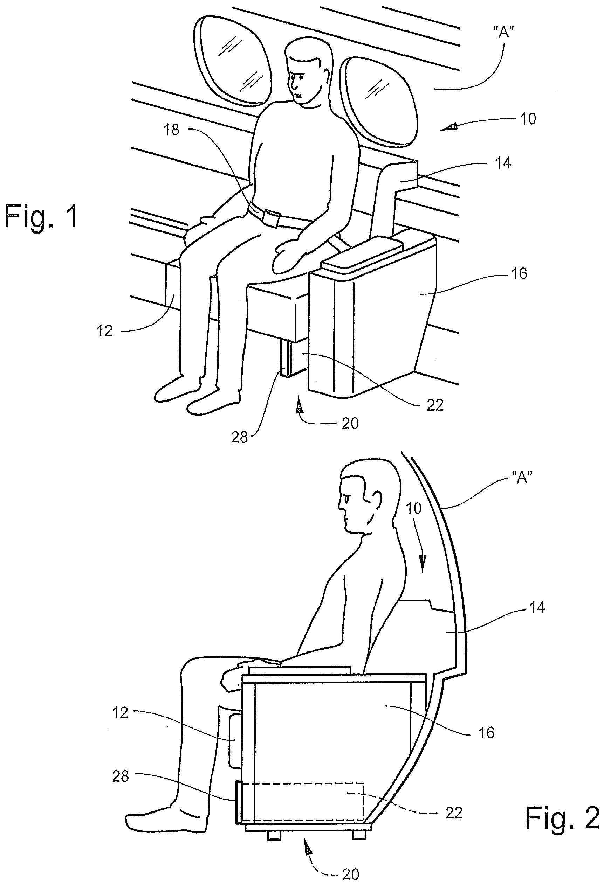

Thus, in accordance with the invention, a leg restraint device 20 is provided. As shown in Figures 1 and 2, the leg restraint device 20 is mounted under the seat 10 forward of the occupant in relation to the aircraft's direction of forward travel. The leg restraint device 20 includes two principal elements a housing 22 mounted under the seat 10, and a deployable restraint panel 24, which includes a cap plate 28 on the distal end. During boarding, deplaning and normal flight, the leg restraint device 20 remains in a retracted condition, as shown in Figures 1 and 2. In the event of an emergency that may result in an abrupt deceleration, the restraint panel 24 is automatically deployed, as explained below.

The leg restraint device 20 as shown in the Figures is a "left-hand" oriented device shown mounted under a seat 10 and a left-hand side of the aircraft fuselage "A", from the position of the seat occupant. A right-hand device constructed in accordance with the invention would be utilized on seats facing inward from the right-hand side of the aircraft fuselage "A." In general, the left and right-hand versions both require mounting an air bag in a housing so that the air bag inflates against the leg of a seat occupant seated in a seat facing inward from the side of the aircraft fuselage, and are mirror constructions of each other.

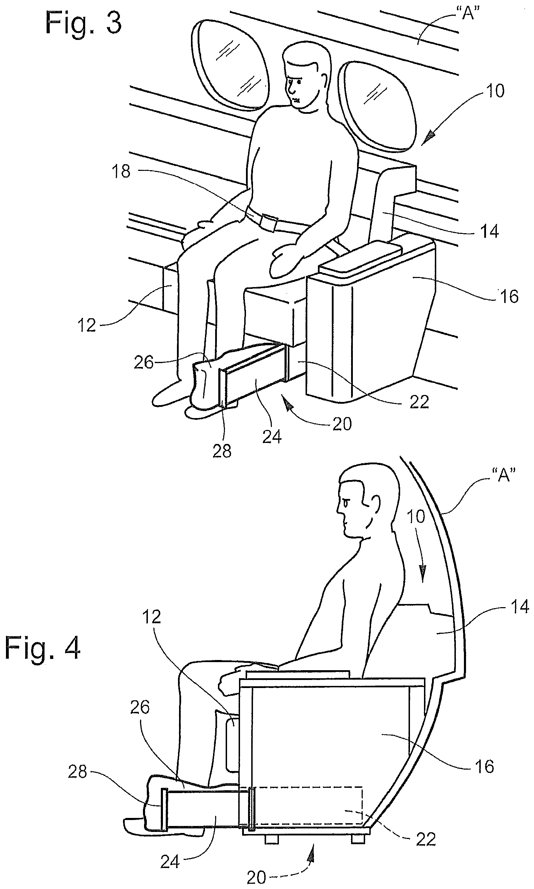

As shown in Figures 3 and 4, the restraint panel 24, when deployed, projects forwardly of the seat 10 into a position where the legs of the seat occupant are positioned behind the restraint panel 24 in relation to the aircraft's direction of forward travel. In the event of an actual abrupt deceleration of the aircraft, the occupant's legs are prevented from continued unrestrained forward motion by the restraint panel 24. As described in further detail below, the restraint panel 24 is deployed by the inflation force imposed on the restraint panel 24 by an air bag 26 that is stored in the housing 22. Upon the occurrence of an event requiring side restraint protection of the seat occupant, the air bag 26 is triggered and during a first phase inflates and deploys the restraint panel 24 by forcing it rapidly out of the end of the housing 22.

During a second phase of the deployment of the air bag 26, it continues inflating and projects outwardly along the side of the deployed restraint panel 24 nearest the seat occupant's foot and lower leg. In this configuration, shown in Figures 3 and 4, the air bag 26 provides an air cushion between the seat occupant's feet and lower legs that prevents direct contact with the inner side of the restraint panel 24. Note that in its fully deployed configuration, the air bag 26 extends beyond the fully deployed position of the cap plate 28 of the restraint panel 24 in order to fully protect the seat occupant's feet and lower legs.

The restraint panel 24 is caused to retract back in to the housing 22 by the rapid deflation of the air bag 26, as is typical of air bag operation. This retraction occurs very rapidly and thus clears the area around the seat 10 for rapid, unrestricted egress by both the seat occupant and other aircraft occupants who may have to move past the seat 10 in order to egress from the aircraft.

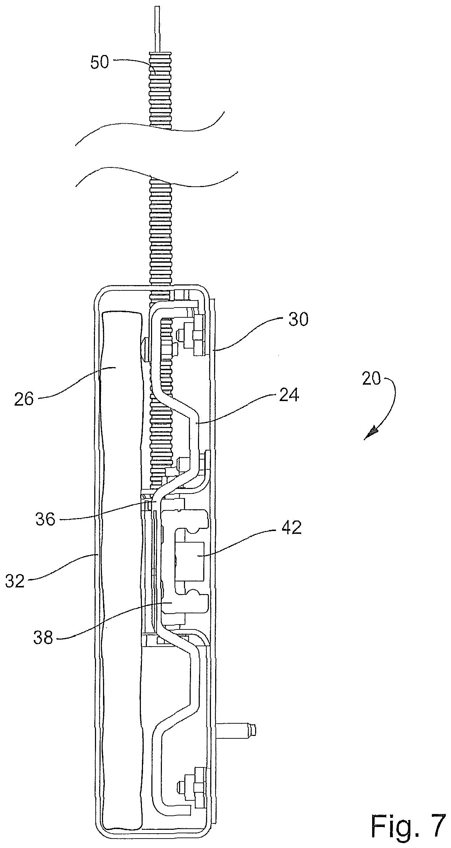

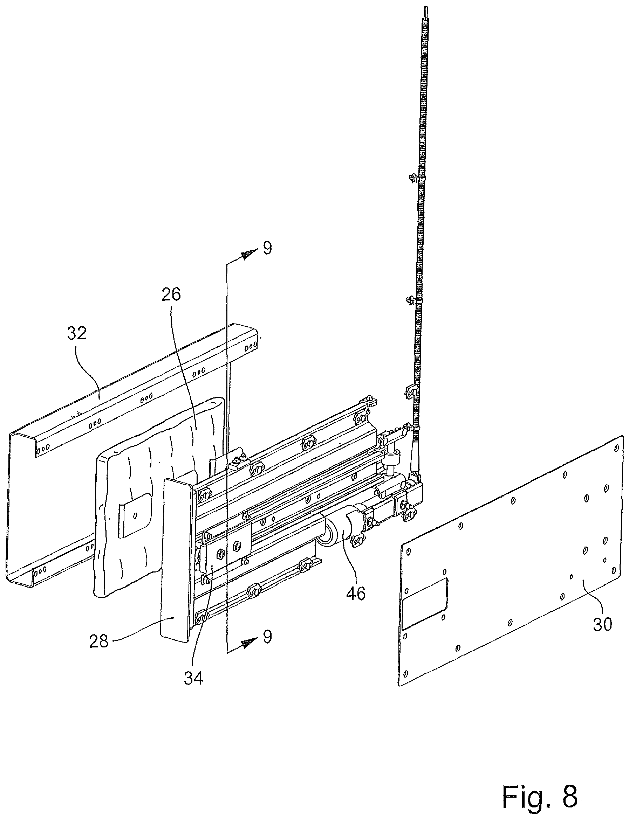

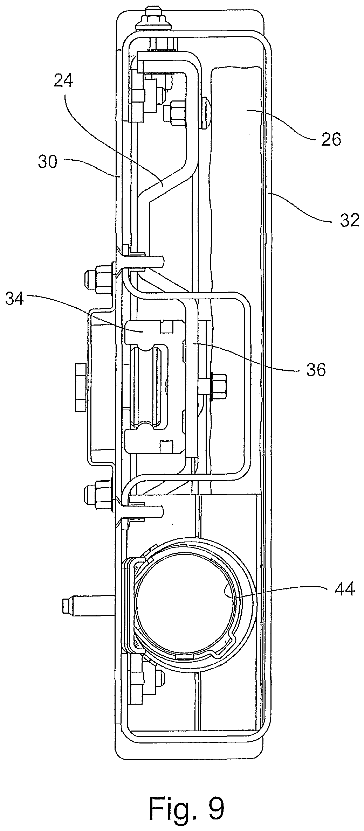

Referring now to Figures 4-9, the housing 22 of the restraint device 20 is formed from two stationary housing covers 30, 32. The restraint panel 24 and the cap plate 28 slide in and out of the retracted and deployed positions on a wheeled guide shuttle 34 mounted on the inner surface of housing cover 32. Note that the restraint panel 24 has a "corrugated" cross-section, Figures 7 and 9, which provides the necessary spacing for the movable components. The guide shuttle 34 is captured in and rides along a central, longitudinally-extending recess 36 in the restraint panel 24.

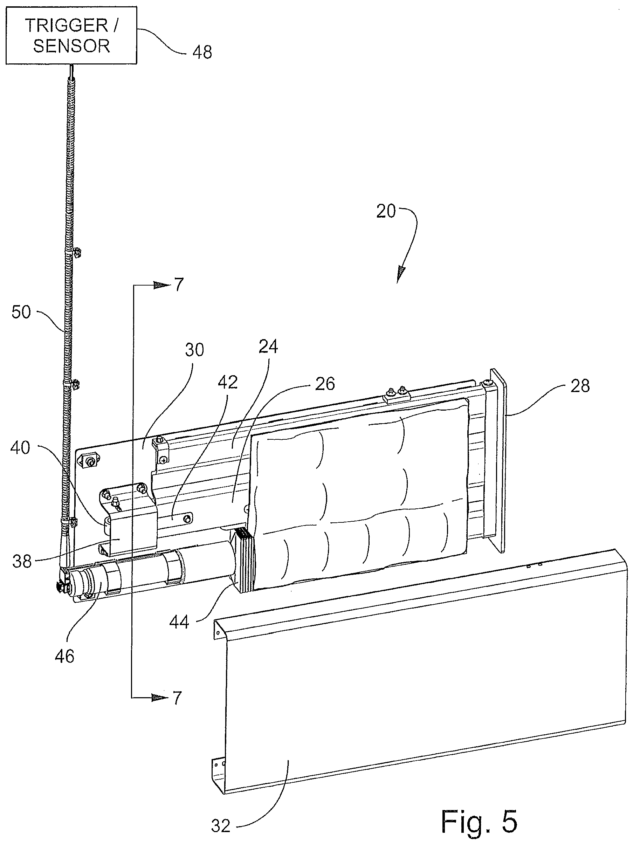

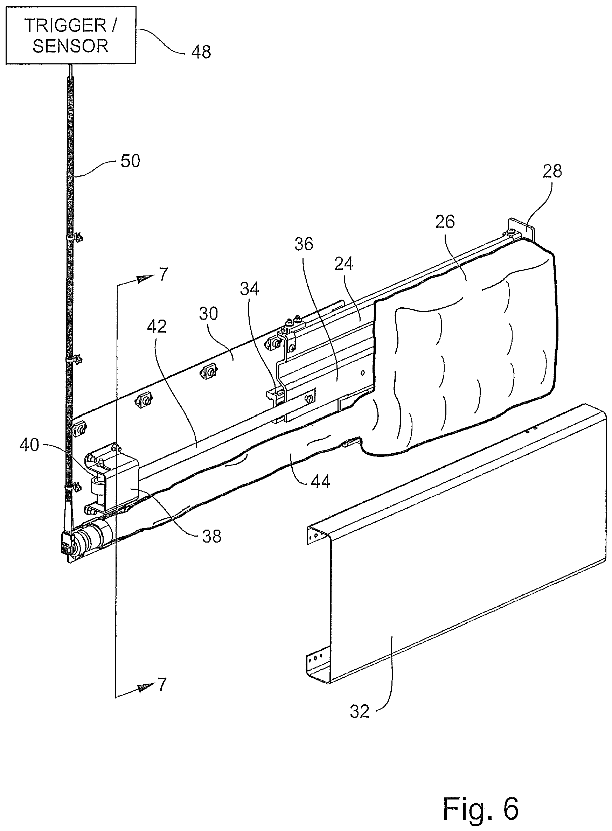

The restraint panel 24 is attached to a retractor that includes a spring housing 38 mounted on the cover 30. A vertical pin 40 mounts a coiled steel spring 42 that is mounted on the restraint panel 24 and biased towards its retracted position. See Figure 5. Activation of the air bag 26 overcomes the bias of the spring 42 during inflation, allowing the restraint panel 24 to deploy, as shown in Figure 6. As inflation ends and deflation begins, the spring 42 causes the restraint panel 24 to immediately retract so that, as described above, the restraint panel 24 does not project into the aircraft aisle impeding egress from the aircraft.

The air bag 26 is mounted on and extends along the length of the restraint panel 24. As is shown in Figure 5, the air bag 26, before deployment, resides in a deflated configuration against the restraint panel 24. The air bag 26 includes a tubular neck 44 that is attached to an inflator 46 mounted on the cover 32. In the deflated configuration, the neck 44 is folded in an accordion manner between the inflator 46 and the air bag 26. The term "air bag" is generally used to describe this device even though gases other than "air" cause the bag to inflate. The inflator 46 may be a cold gas inflator, a hybrid inflator, or a pyrotechnic inflator depending on the design factors of the device. Speed, deployment time, gas temperature, etc. can all dictate the type of inflator 46 utilized to achieve the desired operation and may be the subject of varying legal and technical requirements.

The inflator 46 may be triggered by a trigger/sensor 48 that is also used to activate the seat belt 18, see Figure 6, or by a trigger/sensor that functions only to inflate the air bag 26. As shown in Figures 5 and 6, the trigger/sensor 48 communicates with the inflator 46 through a shielded conduit 50. As shown in Figure 6, inflation of the air bag 26 causes the neck 44 to first inflate as gas passes from the inflator 46 to the air bag 26. This inflation causes the neck 44 to unfold and straighten, driving the air bag 28 and the restraint panel 24 on which it is mounted rapidly forward out of the housing 22 and into the aisle of the aircraft, as shown in Figures 3 and 4. Typically, the air bag 26 is fully inflated within approximately 60-80 milliseconds, and vents in the air bag 26 allow the gas to escape, very rapidly deflating the air bag 26. The spring 42 rapidly returns the restraint panel 24 and air bag 26 to the position shown in Figure 5, as described above.

A leg restraint device for side-seated vehicle occupants according to the invention has been described with reference to specific embodiments and examples. Various details of the invention may be changed without departing from the scope of the invention. Furthermore, the foregoing description of the preferred embodiments of the invention and best mode for practicing the invention are provided for the purpose of illustration only and not for the purpose of limitation, the invention being defined by the claims.

## Claims

1. A leg restraint (20) for side-seated vehicle occupants, and comprising:
(a) a leg-restraining member (24) adapted for being mounted in proximity to a side-facing vehicle seat and selectively moveable between a deployed, outwardly-extending leg-protecting position and a retracted, non-leg interfering position;
(b) an actuator (26) positioned operatively proximate the leg-restraining member (24); **characterized in that** the actuator (26) is responsive to a signal output by a sensor (48) for deploying the leg-restraining member (24) upon the occurrence of an abrupt deceleration of the vehicle sensed by the sensor (48); and
(c) wherein the actuator (26) includes a cushion, and is adapted for being positioned for deployment between the leg-restraining member (24) and the legs of the seat occupant, the cushion being positioned on the actuator to cushion the legs against direct impact against the deployed leg-restraining member (24).

2. A leg restraint (20) according to claim 1, and including a biasing member cooperating with the leg-restraining member (24) to move the leg-restraining member (24) into the retracted position after impact of the occupant's leg against the leg-restraining member (24).

3. A leg restraint (20) for side-seated vehicle occupants according to claim 1, further wherein the actuator during a first phase deploys the leg-restraining member (24) and during a second phase the actuator moves into a position between the leg-restraining member (24) and the legs of the seat occupant wherein the cushion protects the legs against direct impact against the deployed leg-restraining member (24).

4. A leg restraint (20) for side-seated vehicle occupants according to claim 1, further wherein the actuator during a first phase deploys the leg-restraining member (24), during a second phase deploys to a position between the leg-restraining member (24) and the legs of the seat occupant and during a third phase deploys to a position beyond an outermost extent of the deployed leg-restraining member (24) to cushion the legs against direct impact against the deployed leg-restraining member (24).

5. A leg restraint (20) for side-seated vehicle occupants according to claim 1, and comprising:
(d) a retractor for returning the leg-restraining member (24) back into its retracted position upon the leg-restraining member (24) reaching its fully deployed position, wherein the retractor comprises a spring (42) having a bias that is initially overpowered by the operation of the actuator as the leg-restraining member (24) is deployed, and is biased to return the leg-restraining member (24) to its retracted position as the actuator retracts.

6. A leg restraint (20) according to claim 5, wherein the cushion is shaped such that its widest extent is at its distal end.

7. A leg restraint (20) according to claim 1, wherein the leg-restraining device comprises a restraint panel (24) having relatively upright side walls.

8. A leg restraint (20) according to claim 1, and including a sensor (48) for detecting abrupt movement of the vehicle in the direction of forward travel of the vehicle incident to an abrupt deceleration and outputting a responsive signal to a trigger responsive to the signal from the sensor (48) for activating the air bag (26).

9. A leg restraint (20) according to claim 1, and adapted for being mounted on a side-facing aircraft seat for protecting the legs of the seat occupant,:
(a) wherein the leg-restraining member (24) is a restraint panel (24) mounted in proximity to the side-facing aircraft seat and selectively moveable between a deployed, laterally-extending leg-protecting position and a retracted, non-leg interfering position;
(b) wherein the leg restraint (20) includes a sensor (48) for detecting abrupt movement of the vehicle in the direction of forward travel of the vehicle incident to an abrupt deceleration and outputting a responsive signal;
(c) wherein the actuator is mounted on the restraint panel (24) in a normally retracted configuration and in a position wherein, upon actuation, propels the restraint panel (24) into the deployed position and then retracts;
(d) wherein the leg restraint (20) comprises a trigger (48) responsive to the signal output by the sensor (48) for deploying the actuator; and
(e) wherein the leg restraint (20) comprises a biasing member comprising a spring (42) that is initially overpowered by the operation of the actuator as the restraint panel (24) is deployed, and is biased to return the restraint panel (24) to its retracted position as the actuator retracts.

10. A leg restraint (20) according to claim 9, wherein the restraint panel (24) is mounted in a housing adapted for being positioned under the seat bottom of the side-facing aircraft seat.

11. A leg restraint (20) according to claim 10, wherein the restraint panel (24) comprises a slide mounted in the housing for movement on at least one stationary guide shuttle mounted on an inner surface of the housing.

12. A leg restraint (20) according to claim 9, wherein the spring (42) is arranged for returning the leg- restraining member (24) back into its retracted position upon the leg-restraining member (24) reaching its fully deployed position.

13. A leg restraint (20) according to claim 12, wherein the spring (42) has a bias that is initially overpowered by the operation of the actuator as the leg-restraining member (24) is deployed, and is biased to return the leg-restraining member (24) to its retracted position as the actuator retracts.

14. A leg restraint (20) according to claim 11, wherein the restraint panel (24) includes a recess extending along a length of the restraint panel (24), and wherein the guide shuttle (34) is mounted on the housing and has wheels engaging opposing top and bottom sides of the recess (36) to guide the restraint panel (24) between its retracted and deployed positions.

## Patentansprüche

1. Beinrückhaltevorrichtung (20) für an der Seite sitzende Fahrzeuginsassen und umfassend:
a) ein Beinrückhalteelement (24), das geeignet ist, in der Nähe eines zur Seite gerichteten Fahrzeugsitzes montiert zu sein, und das wahlweise zwischen einer entfalteten, sich nach außen erstreckenden Beinschutzposition und einer eingezogenen, die Beine nicht beeinträchtigenden Position bewegbar ist;
b) ein wirkend in der Nähe dem Beinrückhalteelement (24) angeordneter Antrieb (26);
**dadurch gekennzeichnet, dass**
der Antrieb (26) auf eine Signalausgabe durch einen Sensor (48) reagiert, um das Beinrückhalteelement (24) bei Auftreten einer abrupten Verzögerung des Fahrzeugs, die durch den Sensor (48) erfasst wird, zu entfalten; und
c) wobei der Antrieb (26) ein Polster umfasst und geeignet ist, zum Entfalten zwischen dem Beinrückhalteelement (24) und den Beinen des sich auf dem Sitz befindenden Insassen angeordnet zu sein, wobei das Polster an dem Antrieb angeordnet ist, um die Beine gegen einen direkten Aufprall auf das entfaltete Beinrückhalteelement (24) zu polstern.

2. Beinrückhaltevorrichtung (20) nach Anspruch 1, und umfassend ein mit dem Beinrückhalteelement (24) zusammenwirkendes Vorspannelement, um das Beinrückhalteelement (24) nach einem Aufprall des Beins des Insassen gegen das Beinrückhalteelement (24) in die eingezogene Position zu bewegen.

3. Beinrückhaltevorrichtung (20) für an der Seite sitzende Fahrzeuginsassen nach Anspruch 1, wobei weiter der Antrieb während einer ersten Phase das Beinrückhalteelement (24) entfaltet und wobei sich der Antrieb während einer zweiten Phase in eine Position zwischen dem Beinrückhalteelement (24) und den Beinen des sich auf dem Sitz befindenden Insassen bewegt, wobei das Polster die Beine vor direktem Aufprall auf das entfaltete Beinrückhalteelement (24) schützt.

4. Beinrückhaltevorrichtung (20) für an der Seite sitzende Fahrzeuginsassen nach Anspruch 1, wobei weiter der Antrieb während einer ersten Phase das Beinrückhalteelement (24) entfaltet, sich während einer zweiten Phase in eine Position zwischen dem Beinrückhalteelement (24) und den Beinen des sich auf dem Sitz befindenden Insassen entfaltet und sich während einer dritten Phase in eine Position über eine äußerste räumliche Erstreckung des entfalteten Beinrückhalteelements (24) hinaus entfaltet, um die Beine gegen direkten Aufprall auf das entfaltete Beinrückhalteelement (24) zu polstern.

5. Beinrückhaltevorrichtung (20) für an der Seite sitzende Fahrzeuginsassen nach Anspruch 1, und umfassend:
d) eine Einziehvorrichtung, um das Beinrückhalteelement (24) in seine eingezogene Position zurückzubringen, wenn das Beinrückhalteelement (24) seine voll ausgefaltete Position erreicht, wobei die Einziehvorrichtung eine Feder (42) mit einer Vorspannkraft umfasst, die zunächst durch die Betätigung des Antriebs überwunden wird, wenn das Beinrückhalteelement (24) entfaltet wird, und die vorgespannt ist, um das Beinrückhalteelement (24) in seine eingezogene Position zurückzubringen, wenn sich der Antrieb einzieht.

6. Beinrückhaltevorrichtung (20) nach Anspruch 5, wobei das Polster so geformt ist, dass sich seine breiteste räumliche Erstreckung an seinem distalen Ende befindet.

7. Beinrückhaltevorrichtung (20) nach Anspruch 1, wobei die Beinrückhaltevorrichtung eine Rückhalteplatte (24) mit vergleichsweise aufrechten Seitenwänden umfasst.

8. Beinrückhaltevorrichtung (20) nach Anspruch 1, und umfassend einen Sensor (48) zum Erfassen einer abrupten Bewegung des Fahrzeugs in Richtung der Vorwärtsfahrt des Fahrzeugs resultierend aus einer abrupten Verzögerung und zum Ausgeben eines Reaktionssignals an einen Auslöser, der auf das Signal von dem Sensor (48) reagiert um den Airbag (26) zu aktivieren.

9. Beinrückhaltevorrichtung (20) nach Anspruch 1, und die geeignet ist, um an einem zur Seite gerichteten Flugzeugsitz zum Schützen der Beine des sich auf dem Sitz befindenden Insassen montiert zu sein:
a) wobei das Beinrückhalteelement (24) eine Rückhalteplatte (24) ist, die in der Nähe des zur Seite gerichteten Flugzeugsitzes montiert ist und wahlweise zwischen einer entfalteten, sich seitlich erstreckenden Beinschutzposition und einer eingezogenen, die Beine nicht beeinträchtigenden Position bewegbar ist;
b) wobei die Beinrückhaltevorrichtung (20) einen Sensor (48) zum Erfassen einer abrupten Bewegung des Fahrzeugs in Richtung der Vorwärtsfahrt des Fahrzeugs resultierend aus einer abrupten Verzögerung und zum Ausgeben eines Reaktionssignals umfasst;
c) wobei der Antrieb an der Rückhalteplatte (24) in einer normalen eingezogenen Anordnung und in einer Position montiert ist, wobei der Antrieb bei Betätigung die Rückhalteplatte (24) in die entfaltete Position antreibt und sich dann einzieht;
d) wobei die Beinrückhaltevorrichtung (20) einen Auslöser (48) umfasst, der auf die Signalausgabe durch den Sensor (48) zum Entfalten des Antriebs reagiert; und
e) wobei die Beinrückhaltevorrichtung (20) ein Vorspannelement umfassend eine Feder (42) umfasst, die zunächst durch die Betätigung des Antriebs überwunden wird, wenn die Rückhalteplatte (24) entfaltet wird, und die vorgespannt ist, um das Beinrückhalteelement (24) in seine eingezogene Position zurückzubringen, wenn sich der Antrieb einzieht.

10. Beinrückhaltevorrichtung (20) nach Anspruch 9, wobei die Rückhalteplatte (24) in einem Gehäuse montiert ist, das geeignet ist, um unter der Sitzfläche des zur Seite gerichteten Flugzeugsitzes angeordnet zu sein.

11. Beinrückhaltevorrichtung (20) nach Anspruch 10, wobei die Rückhalteplatte (24) eine in dem Gehäuse montierte Schiene zum Bewegen an wenigstens einem an einer inneren Oberfläche des Gehäuses montierten stationären Führungsschlitten umfasst.

12. Beinrückhaltevorrichtung (20) nach Anspruch 9, wobei die Feder (42) angeordnet ist, um das Beinrückhalteelement (24) in seine eingezogene Position zurückzubringen, wenn das Beinrückhalteelement (24) seine voll ausgefaltete Position erreicht.

13. Beinrückhaltevorrichtung (20) nach Anspruch 12, wobei die Feder (42) eine Vorspannung aufweist, die zunächst durch die Betätigung des Antriebs überwunden wird, wenn das Beinrückhalteelement (24) entfaltet wird, und wobei die Feder vorgespannt ist, um das Beinrückhalteelement (24) in seine eingezogene Position zurückzubringen, wenn sich der Antrieb einzieht.

14. Beinrückhaltevorrichtung (20) nach Anspruch 11, wobei die Rückhalteplatte (24) eine sich über eine Länge der Rückhalteplatte (24) erstreckende Ausnehmung umfasst, und wobei der Führungsschlitten (34) an dem Gehäuse montiert ist und Räder aufweist, die in gegenüberliegenden Ober- und Unterseiten der Ausnehmung (36) eingreifen, um die Rückhalteplatte (24) zwischen seinen eingezogenen und ausgefalteten Positionen zu führen.

## Revendications

1. Dispositif de retenue de jambes (20) pour occupants de véhicule à sièges latéraux, et comprenant :
(a) un élément de retenue de jambes (24) adapté pour être monté à proximité d'un siège de véhicule à visée latérale et pouvant se déplacer sélectivement entre une position déployée de protection de jambes s'étendant vers l'extérieur et une position rétractée sans interférence avec les jambes ;
(b) un actionneur (26) positionné de manière fonctionnelle à proximité de l'élément de retenue de jambes (24) ; **caractérisé en ce que** l'actionneur (26) est sensible à un signal délivré en sortie par un capteur (48) pour déployer l'élément de retenue de jambes (24) dès la survenue d'une décélération abrupte du véhicule détectée par le capteur (48) ; et
(c) dans lequel l'actionneur (26) comporte un coussin, et est adapté pour être positionné pour le déploiement entre l'élément de retenue de jambes (24) et les jambes de l'occupant de siège, le coussin étant positionné sur l'actionneur pour protéger les jambes contre un choc direct contre l'élément de retenue de jambes déployé (24).

2. Dispositif de retenue de jambes (20) selon la revendication 1, et comportant un élément de sollicitation coopérant avec l'élément de retenue de jambes (24) pour déplacer l'élément de retenue de jambes (24) vers la position rétractée après un choc de la jambe de l'occupant contre l'élément de retenue de jambes (24).

3. Dispositif de retenue de jambes (20) pour occupants de véhicule à sièges latéraux selon la revendication 1, dans lequel, en outre l'actionneur déploie, pendant une première phase, l'élément de retenue de jambes (24) et pendant une deuxième phase, l'actionneur se déplace vers une position entre l'élément de retenue de jambes (24) et les jambes de l'occupant de siège, où le coussin protège les jambes contre un choc direct contre l'élément de retenue de jambes déployé (24).

4. Dispositif de retenue de jambes (20) pour occupants de véhicule à sièges latéraux selon la revendication 1, dans lequel, en outre, l'actionneur déploie, pendant une première phase, l'élément de retenue de jambes (24), pendant une deuxième phase, se déploie vers une position entre l'élément de retenue de jambes (24) et les jambes de l'occupant de siège, et pendant une troisième phase, se déploie vers une position au-delà de l'extension la plus extérieure de l'élément de retenue de jambes déployé (24) pour protéger les jambes contre un choc direct contre l'élément de retenue de jambes déployé (24).

5. Dispositif de retenue de jambes (20) pour occupants de véhicule à sièges latéraux selon la revendication 1, et comprenant :
(d) un rétracteur pour ramener l'élément de retenue de jambes (24) vers sa position rétractée dès que l'élément de retenue de jambes (24) atteint sa position complètement déployée, où le rétracteur comprend un ressort (42) ayant une sollicitation initialement maîtrisée par le fonctionnement de l'actionneur lorsque l'élément de retenue de jambes (24) est déployé, et est sollicité pour ramener l'élément de retenue de jambes (24) vers sa position rétractée lorsque l'actionneur se rétracte.

6. Dispositif de retenue de jambes (20) selon la revendication 5, dans lequel le coussin est formé de sorte que sa plus large extension se trouve au niveau de son extrémité distale.

7. Dispositif de retenue de jambes (20) selon la revendication 1, dans lequel le dispositif de retenue de jambes comprend un panneau de retenue (24) ayant des parois latérales relativement verticales.

8. Dispositif de retenue de jambes (20) selon la revendication 1, et comportant un capteur (48) pour détecter un mouvement abrupt du véhicule dans la direction de déplacement vers l'avant du véhicule découlant d'une décélération abrupte et pour délivrer en sortie un signal de réponse à un déclencheur sensible au signal provenant du capteur (48) afin d'activer le coussin d'air (26).

9. Dispositif de retenue de jambes (20) selon la revendication 1, et adapté pour être monté sur un siège d'aéronef à visée latérale permettant de protéger les jambes de l'occupant de siège,
(a) dans lequel l'élément de retenue de jambes (24) est un panneau de retenue (24) monté à proximité du siège d'aéronef à visée latéral et pouvant se déplacer sélectivement entre une position déployée de protection de jambes s'étendant latéralement et une position rétractée sans interférence avec les jambes ;
(b) dans lequel le dispositif de retenue de jambes (20) comporte un capteur (48) pour détecter un mouvement abrupt du véhicule dans la direction de déplacement vers l'avant du véhicule, découlant d'une décélération abrupte et pour délivrer en sortie un signal de réponse ;
(c) dans lequel l'actionneur est monté sur le panneau de retenue (24) dans une configuration normalement rétractée et dans une position dans laquelle, dès l'actionnement, il propulse le panneau de retenue (24) vers la position déployée, puis se rétracte ;
(d) dans lequel le dispositif de retenue de jambes (20) comprend un déclencheur (48) sensible au signal délivré en sortie par le capteur (48) pour déployer l'actionneur ; et
(e) dans lequel le dispositif de retenue de jambes (20) comprend un élément de sollicitation comprenant un ressort (42) qui est initialement maîtrisé par le fonctionnement de l'actionneur lorsque le panneau de retenue (24) est déployé et est sollicité pour ramener le panneau de retenue (24) vers sa position rétractée lorsque l'actionneur se rétracte.

10. Dispositif de retenue de jambes (20) selon la revendication 9, dans lequel le panneau de retenue (24) est monté dans un boîtier adapté pour être positionné sous l'assise de siège du siège d'aéronef à visée latérale.

11. Dispositif de retenue de jambes (20) selon la revendication 10, dans lequel le panneau de retenue (24) comprend une glissière montée dans le boîtier pour se déplacer sur au moins une navette de guidage fixe montée sur une surface interne du boîtier.

12. Dispositif de retenue de jambes (20) selon la revendication 9, dans lequel le ressort (42) est agencé pour ramener l'élément de retenue de jambes (24) vers sa position rétractée dès que l'élément de retenue de jambes (24) atteint sa position complètement déployée.

13. Dispositif de retenue de jambes (20) selon la revendication 12, dans lequel le ressort (42) a une sollicitation qui est initialement maîtrisée par le fonctionnement de l'actionneur lorsque l'élément de retenue de jambes (24) est déployé, et est sollicité pour ramener l'élément de retenue de jambes (24) vers sa position rétractée lorsque l'actionneur se rétracte.

14. Dispositif de retenue de jambes (20) selon la revendication 11, dans lequel le panneau de retenue (24) comporte un évidement s'étendant sur une longueur du panneau de retenue (24), et dans lequel la navette de guidage (34) est montée sur le boîtier et possède des roues s'engageant avec des côtés supérieur et inférieur opposés de l'évidement (36) pour guider le panneau de retenue (24) entre ses positions rétractée et déployée.
